# EUROPEAN PATENT SPECIFICATION

(11) **EP 0 520 525 B1**
(45) Date of publication and mention of the grant of the patent: **30.11.1994**
(21) Application number: 92201415.4
(22) Date of filing: 19.05.1992
(51) Int. Cl.: B60T 13/74, F16D 65/34

(54) **Electrically actuated vehicle brake**
Elektrisch betätigte Fahrzeugbremse
Frein de véhicule actionné électriquement

(30) Priority: 24.06.1991 US 720087
(43) Date of publication of application: 30.12.1992
(73) Proprietor: GENERAL MOTORS CORPORATION, Detroit Michigan 48202 (US)
(72) Inventor: Unterborn, Ralph John, Dayton, Ohio 45459 (US)
(74) Representative: Denton, Michael John

(56) References cited:
- US-A- 5 000 297
- US-A- 5 024 299

## Description

The field of the present invention is that of a vehicle brake which has an electrically powered actuator and a parking brake.

It has come to pass in the pursuit of an improved vehicle brake, various electrically actuated brakes have been brought forth. Examples of such electrically actuated brakes are shown and described in US Patent Nos. 5,000,297 and 5,024,299, the disclosures of which are incorporated by reference herein.

A vehicle brake in accordance with the present invention is characterised by the features specified in claim 1.

The present invention provides an electrically actuated vehicle brake with an alternative parking brake mechanism than described in the aforementioned disclosures.

The present invention, in a preferred embodiment, is especially useful in an electrically actuated vehicle brake in an electrically powered vehicle. In electrically powered vehicles there is a great desire to delete the fluid actuated braking system due to weight requirements of the vehicle. The present invention is applicable for use with either drum brakes or disc brakes.

The present invention will now be described, by way of example, with reference to the accompanying drawings, in which:-
Figure 1 is a front elevational view of a preferred embodiment vehicle brake of the present invention with portions thereof in cross-section;
Figures 2 and 3 are section views taken from Figure 1 along lines 2-2 and 3-3 respectively;
Figure 4 is a sectional view taken along line 4-4 of Figure 3;
Figure 5 is sectional view taken along line 5-5 of Figure 4; and
Figure 6 is a rollout of cam displacement profile of mating cam faces.

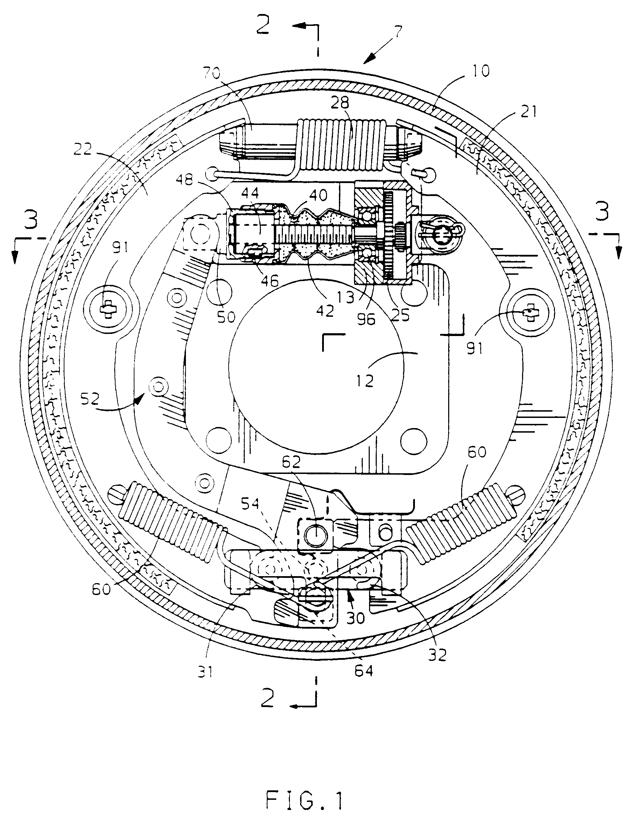

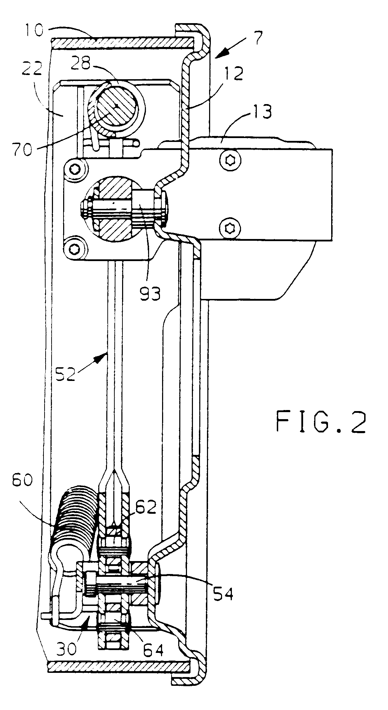

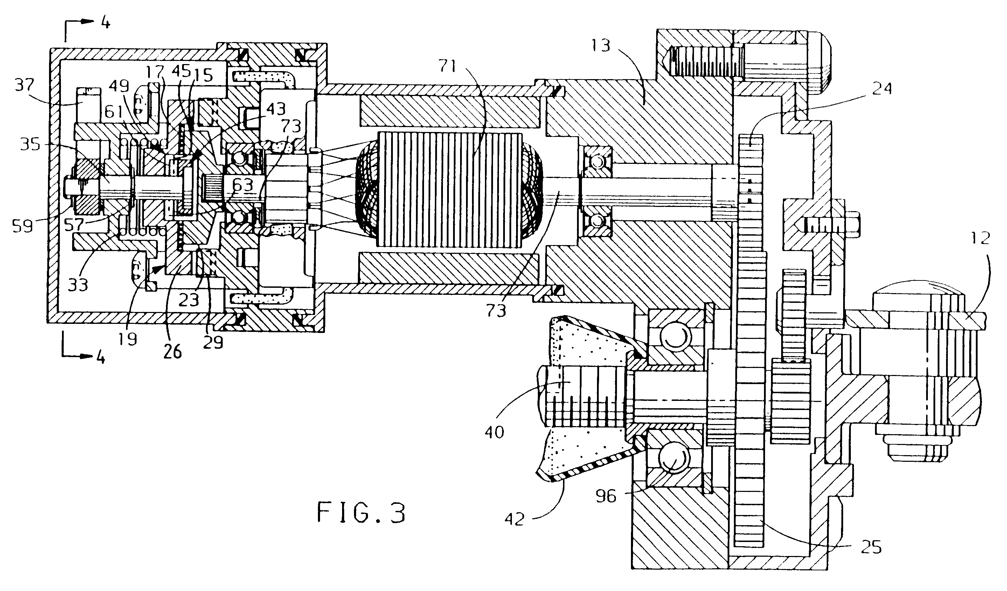

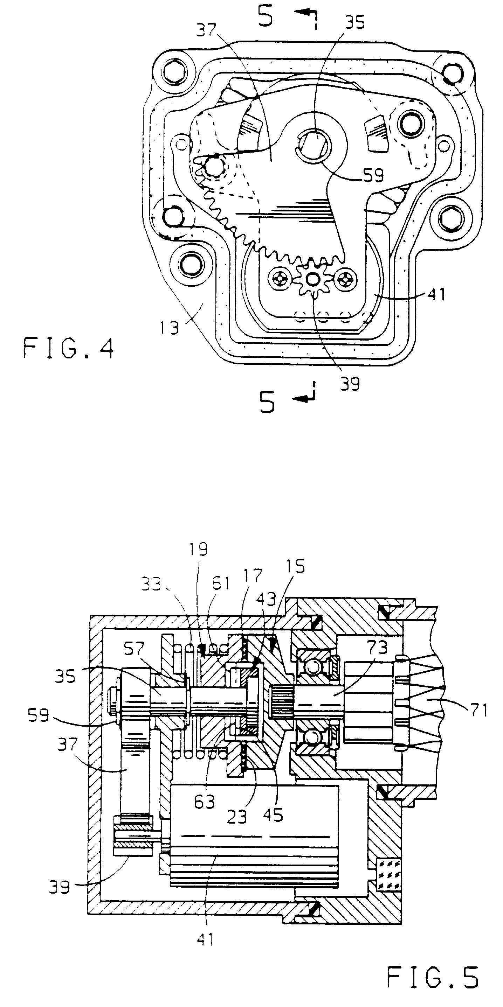

Referring to Figures 1-5 the vehicle brake 7 of the present invention comprises a drum brake assembly having a conventional brake drum 10 (an outline of which is shown) which is provided for connection to a wheel of a vehicle. Mounted on the vehicle is a backing plate 12 traditionally mounted to the axial housing. Mounted by spring loaded pins 91 to bias them towards the backing plate 12 are friction means in the form of secondary 22 and primary 21 brake shoes. A spring 28 holds the primary and secondary brake shoes 21, 22 together at one end against a stop 70. At the other end the primary and secondary brake shoes 21, 22 contact an anchor 30 with pins 31 and 32. The anchor 30 is fixed with respect to the backing plate 12. During brake actuation the primary and secondary brake shoes 21, 22 move or split apart from one another away from the anchor 30.

Rotatively mounted on the backing plate 12, by way of a bearing 96, is a power screw 40. The power screw 40 is covered by a boot 42 and is threadably engaged with a non-rotative nut 44. The nut is keyed at 46 into a frame member 48 to prevent its rotation. The frame member 48 has an extension 50 (Figure 1) which is pivotally connected to an apply lever 52. The apply lever 52 is of the shape of a bent arm and has a loss motion pivotal connection with the backing plate 12 intermediate the two anchors pins 32 and 31 for the primary and secondary brake shoes 21, 22 via a pin 54.

Each brake shoe 21, 22 has a return spring 60 for returning that brake shoe towards the anchor 30. The apply lever 52 has pivotal movement with respect to the brake shoes 21, 22 by shoe actuators 62, 64 which contact portions of the brake shoes. Movement of the non-rotative nut 44 to the right, as shown in Figure 1, will cause the apply lever 52 to rotate clockwise on the pin 54 causing the brake shoes 21, 22 to be contacted and separated in an outward direction. The return spring 60 will cause the brake shoes 21, 22 to return to the non-actuated position.

The actuator for the vehicle brake 7 therefore includes the apply lever 52, non-rotative nut 44, power screw 40, along with meshing gears 25, 24, described below in more detail.

A housing or frame 13 is provided which mounts a (brake actuating) electric motor 71 to the backing plate 12. The electric motor 71 has a shaft and/or rotor 73 which has connected thereto a pinion gear 24. The pinion gear 24 and a large gear 25 form a gear train which torsionally connects rotor 73 with the power screw 40.

Connected on the opposite end of the rotor 73 is a first friction plate 15. The first friction plate 15 has a friction surface 17 which faces away from the motor 71.

Biased towards the first friction plate 15 by a spring 33 is a second friction plate 19. The second friction plate 19 has a corresponding friction surface 23, which, when mated with the friction surface 17, restrains the first friction plate 15 (and its torsionally associated rotor 73) from rotating. To provide torsional fixation of the second friction plate 19 with respect to the electric motor 71 the second friction plate has extending lugs 26 which nest in ears 29 of a part of the frame 13.

Mounted in the frame 13 for rotation along a rotational axis coterminous with the rotational axis of the rotor 73 is a parking brake shaft 35. The parking brake shaft 35 has along one of its ends a (fixably connected) sector gear 37. The sector gear 37 is powered by a pinion gear 39 connected with a parking brake actuator motor 41.

A retaining ring 59 in cooperation with a surrounding washer 57 prevent translational movement of the parking brake shaft 35 along its longitudinal axis.

Torsionally associated or fixably connected with the parking brake shaft 35 at its end generally opposite its connection with the sector gear 37 is a lifter or beta cam member 43 with a peak 61. The peak 61 selectively mates with an alpha cam member 49 which is associated with the second friction plate 19.

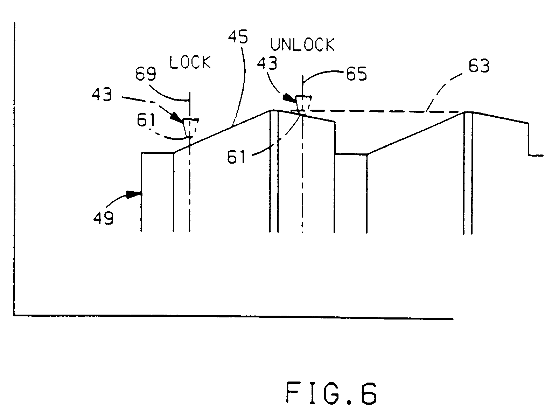

The alpha cam member 49 has a surface 45 with a peak 63 directed towards the beta cam member 43 (Figures 5 and 6).

In operation, activation of the vehicle brake 7 will first signal the electric motor 71 to actuate the brake shoes 21,22 outward. Prior to being in the parking brake modes, the parking brake shaft 35 would have been pivoted in such a position 65 (Figure 6) that the peak 61 on the beta cam member 43 would have forceably translated the alpha cam member 49 (Figure 6) away from the electric motor 71 therefore allowing free movement of the brake actuating electric motor 71 since the surface 45 would have caused a separation of the second friction plate 19 from the first friction plate 15 against the biasing of the spring 33.

To actuate, the parking brake actuator motor 41 will be signalled to turn the pinion gear 39. This powers the sector gear 37 to turn the parking brake shaft 35. The above torsional movement will cause the peak 61 and surface 45 to rotate to a position 69 (Figure 6) such that the clearance between the first and second friction plates 15, 19 will be eliminated and the spring 33 biasing of the second friction plate 19 will cause the second friction plate 19 to be urged towards the first friction plate and mate the friction surfaces 23,17, therefore locking the position of the electric motor 71. Since the rotor 73 is now positionally locked the brake shoes 21, 22 cannot be released. Cam overlocking occurs since to get from a locked position 69 to an unlocked position 65 or vice versa a displacement of the location of the alpha cam member 49 must occur against the biasing of the spring 33. There does not need to be continual powering of the parking brake actuator motor 41 in either position 69 or 65.

Applications of the present invention, in electrically powered disc brakes are possible.

## Claims

1. A vehicle brake (7) having an actuator (52,44,40) which is electrically powered for moving a friction means (21,22) into contact with a wheel, and a parking brake, the vehicle brake comprising an electric motor (71) with a rotor (73) torsionally associated with an actuator (52,44,40) to power the actuator for applying the friction means (21,22); and means (60) for returning the friction means (21,22) from an actuated position to a release position; characterised by a first friction plate (15) associated with the rotor (73); a second friction plate (19) for selective mating with the first friction plate (15), torsionally fixed with respect to the rotor (73); a parking brake actuator (41); a parking brake shaft (35) powered for rotation by the parking brake actuator (41); and cam means (43,49) associated with the friction plates (15,19) and the parking brake shaft (35) whereby rotation of the parking brake shaft (35) translates into relative motion between the friction plates (15,19) to position the friction plates (15,19) together to lock the vehicle brake (7), or release the friction plates (15,19) from one another to release the vehicle brake (7).

2. A vehicle brake as claimed in claim 1, wherein the parking brake actuator is an electric motor (41) separate from the electric motor (71) powering the actuator (52,44,40).

3. A vehicle brake as claimed in claim 1 or claim 2, wherein the cam means (43,49) has an overcentre position wherein the cam means will cause the first and second friction plates (15,19) to be positioned separate from one another without further input from the parking brake actuator (41).

4. A vehicle brake as claimed in any one of claims 1 to 3, wherein the second friction plate (19) is spring biased towards the first friction plate (15); and wherein the cam means comprises an alpha cam member (49) mounted on the second friction plate, and beta cam member (43) mounted on the parking brake shaft (35) for mating with the alpha cam member, rotation of the parking brake shaft causing cam surfaces on the alpha and beta cam members to rotate with respect to one another causing the first and second friction plates to contact locking, or to separate releasing, the vehicle brake.

## Patentansprüche

1. Eine Fahrzeugbremse (7) mit einer Betätigungsvorrichtung (52, 44, 40), die elektrisch angetrieben wird, um ein Reibungsmittel (21, 22) in Kontakt mit einem Rad zu bewegen, und einer Parkbremse, wobei die Fahrzeugbremse einen Elektromotor (71) mit einem Rotor (73), der torsionsmäßig der Betätigungsvorrichtung (52, 44, 40) zugeordnet ist, um die Betätigungsvorrichtung zur Aufbringung des Reibungsmittels (21, 22) anzutreiben; und Mittel (60) aufweist, um das Reibungsmittel (21, 22) von einer betätigten Position zu einer Löseposition zurückzubringen;
**gekennzeichnet** durch
eine erste Reibungsplatte (15), die dem Rotor (73) zugeordnet ist; eine zweite Reibungsplatte (19) für einen selektiven Eingriff mit der ersten Reibungsplatte (15), die torsionsmäßig bezüglich des Rotors (73) fixiert ist; eine Parkbremsenbetätigungsvorrichtung (41); eine Parkbremsenwelle (35), die zur Drehung durch die Parkbremsenbetätigungsvorrichtung (41) angetrieben wird; und Nockenmittel (43, 49), die den Reibungsplatten (15, 19) und der Parkbremsenwelle (35) zugeordnet sind, wodurch sich eine Drehung der Parkbremsenwelle (35) in eine Relativbewegung zwischen den Reibungsplatten (15, 19) übersetzt, um die Reibungsplatten (15, 19) zusammenzupositionieren und somit die Fahrzeugbremse (7) zu verriegeln, oder die Reibungsplatten (15, 19) voneinander zu lösen und somit die Fahrzeugbremse (7) zu lösen.

2. Eine Fahrzeugbremse wie in Anspruch 1 beansprucht,
worin die Parkbremsenbetätigungsvorrichtung ein Elektromotor (41) getrennt vom Elektromotor (71) ist, welcher die Betätigungsvorrichtung (52, 44, 40) antreibt.

3. Eine Fahrzeugbremse wie in Anspruch 1 oder Anspruch 2 beansprucht,
worin das Nockenmittel (43, 49) eine Überzentrumsposition besitzt, worin das Nockenmittel die ersten und zweiten Reibungsplatten (15, 19) veranlaßt, getrennt voneinander ohne weiteren Eingang von der Parkbremsenbetätigungsvorrichtung (41) positioniert zu sein.

4. Eine Fahrzeugbremse wie in einem der Ansprüche 1 bis 3 beansprucht,
worin die zweite Reibungsplatte (19) auf die erste Reibungsplatte (15) zu federvorgespannt ist; und worin das Nockenmittel ein Alphanockenbauteil (49), das auf der zweiten Reibungsplatte angebracht ist, und ein Betanokkenbauteil (43) aufweist, das auf der Parkbremsenwelle (35) angebracht ist für einen Eingriff mit dem Alphanokkenbauteil, wobei eine Drehung der Parkbremsenwelle Nockenoberflächen auf den Alpha- und Betanockenbauteilen veranlaßt, sich bezüglich einander zu drehen, wodurch die ersten und zweiten Reibungsplatten veranlaßt werden, in Kontakt zu gelangen, wodurch die Fahrzeugbremse verriegelt wird, oder sich zu trennen, wodurch die Fahrzeugbremse gelöst wird.

## Revendications

1. Frein (7) de véhicule ayant un actionneur (52, 44, 40) qui est activé électriquement pour déplacer des moyens de friction (21, 22) en contact avec une roue, et un frein de stationnement, le frein de véhicule comportant un moteur électrique (71) ayant un rotor (73) associé de manière torsionnelle à l'actionneur (52, 44, 40) pour activer l'actionneur afin d'appliquer les moyens de friction (21, 22), et des moyens (60) pour faire revenir les moyens de friction (21, 22) depuis une position active vers une position de libération, caractérisé en ce qu'il comporte une première plaque de friction (15) associée au rotor (73), une seconde plaque de friction (19) destinée à être appariée de manière sélective à la première plaque de friction (15), fixée de manière torsionnelle par rapport au rotor (73), un actionneur (41) de frein de stationnement, un arbre (35) de frein de stationnement activé pour tourner par l'intermédiaire de l'actionneur (41) de frein de stationnement, et des moyens (43, 49) formant came associés aux plaques de friction (15, 19) et à l'arbre (35) de frein de stationnement de sorte qu'une rotation de l'arbre (35) de frein de stationnement est transformée en mouvement relatif entre les plaques de friction (15, 19) pour positionner les plaques de friction (15, 19) associées pour verrouiller le frein (7) de véhicule ou libérer les plaques de friction (15, 19) l'une de l'autre pour libérer le frein (7) de véhicule.

2. Frein de véhicule selon la revendication 1, dans lequel l'actionneur de frein de stationnement est un moteur électrique (41) séparé du moteur électrique (71) activant l'actionneur (52, 44, 40).

3. Frein de véhicule selon la revendication 1 ou 2, dans lequel les moyens (43, 49) formant came ont une position de passage sur l'axe dans laquelle les moyens formant came entraînent la première et la seconde plaques de friction (15, 19) à être positionnées séparées l'une de l'autre sans entrée supplémentaire provenant de l'actionneur (41) de frein de stationnement.

4. Frein de véhicule selon l'une quelconque des revendications 1 à 3, dans lequel la seconde plaque de friction (19) est rappelée par un ressort vers la première plaque de friction (15), et dans lequel les moyens formant came comportent un élément (49) formant came alpha monté sur la seconde plaque de friction, et un élément (43) formant came bêta monté sur l'arbre (35) de frein de stationnement destiné à s'apparier à l'élément formant came alpha, une rotation de l'arbre de frein de stationnement entraînant les surfaces de came des éléments formant came alpha et came bêta à tourner l'une par rapport à l'autre entraînant la première et la seconde plaques de friction à verrouiller par contact le frein du véhicule ou à libérer par séparation ce dernier.
